(19) **Europäisches Patentamt / European Patent Office / Office européen des brevets**

(11) **EP 4 364 375 B1**

(12) **EUROPEAN PATENT SPECIFICATION**

(45) Date of publication and mention
of the grant of the patent:
**03.09.2025 Bulletin 2025/36**

(21) Application number: **21740463.1**

(22) Date of filing: **01.07.2021**

(51) International Patent Classification (IPC):
**H04L 41/5019** (2022.01)   **H04L 41/5051** (2022.01)
**H04L 41/0895** (2022.01)   **H04L 41/0897** (2022.01)
**H04L 43/0852** (2022.01)   **H04L 41/40** (2022.01)

(52) Cooperative Patent Classification (CPC):
**H04L 41/0897; H04L 41/0895; H04L 41/5019;**
**H04L 41/5051; H04L 43/0852;** H04L 41/40

(86) International application number:
**PCT/EP2021/068235**

(87) International publication number:
**WO 2023/274545 (05.01.2023 Gazette 2023/01)**

(54) **OVER-THE-TOP AUTOMATION SOLUTION TO GUARANTEE FLOW ADMISSION DELAY IN MULTI-VENDOR CLOUD SYSTEMS**

OVER-THE-TOP-AUTOMATISIERUNGSLÖSUNG ZUR GEWÄHRLEISTUNG DER FLUSSZULASSUNGSVERZÖGERUNG IN CLOUD-SYSTEMEN MIT MEHREREN ANBIETERN

SOLUTION D'AUTOMATISATION HORS OFFRE DU FOURNISSEUR D'ACCÈS À INTERNET POUR GARANTIR UN DÉLAI D'ADMISSION DE FLUX DANS DES SYSTÈMES EN NUAGE MULTI-VENDEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.05.2024 Bulletin 2024/19**

(73) Proprietor: **Telefonaktiebolaget LM Ericsson (publ)**
**164 83 Stockholm (SE)**

(72) Inventors:
• **MILLNERT, Victor**
**223 50 LUND (SE)**
• **EKER, Johan**
**223 55 LUND (SE)**

(74) Representative: **Ericsson**
**Patent Development**
**Torshamnsgatan 21-23**
**164 80 Stockholm (SE)**

(56) References cited:
**US-A1- 2018 139 106     US-A1- 2021 120 551**

• **BEKTAS CANER ET AL: "SAMUS: Slice-Aware Machine Learning-based Ultra-Reliable Scheduling", ICC 2021 - IEEE INTERNATIONAL CONFERENCE ON COMMUNICATIONS, IEEE, 14 June 2021 (2021-06-14), pages 1 - 6, XP033952983, DOI: 10.1109/ ICC42927.2021.9500837**

## Description

TECHNICAL FIELD

The present disclosure relates generally to management of telecommunications networks deployed on top of cloud platforms and, more particularly, to an automation system to guarantee a flow admission delay for telecommunication networks deployed in multi-vendor cloud systems.

BACKGROUND

Telecommunication networks are currently being transformed from a system of network appliances operating on dedicated hardware to a system of virtualized network functions (VNFs) implemented on top of a cloud platform. The VNFs may be implemented in both dedicated clouds controlled by a communication service provider (CSP) and public clouds or multi-tenant clouds. Additionally, a single telecommunications network can span multiple cloud platforms controlled by different cloud providers.

The adoption of cloud technologies for telecommunication services provides a number of benefits, such as increased flexibility and agility, ability to rapidly scale services, and lower costs, but these benefits come at the cost of increased complexity. With the move towards VNFs, the underlying execution platform for network functionality may span multiple cloud platforms and providers, each with different characteristics, e.g., control-plane latency, scaling mechanisms, etc. This increase in complexity presents a challenge from an operations management standpoint. Performance may vary widely between cloud platforms. Additionally, each cloud platform will be subject to varying workloads and changing environments. The varying performance and conditions in each cloud platform makes management of the telecom network more cumbersome and less predictable.

As an example of the increased complexity, a cloud-based telecom network should be able to scale with demand so that the service requests can be handled. Additionally, it is important for CSPs to be able to accept new services within a given time frame, e.g., a deadline configured by the CSP. Currently, scaling a network deployed in a multi-cloud environment in order to meet an admission deadline or other Quality of Service (QoS) criteria is difficult because the characteristics of the underlying cloud platforms are not known. As demand increases, the CSP will request allocation of additional resources from the cloud providers to meet the increasing demand. Because the different cloud platforms will differ in the latency to allocate new resource, the CSP which will be faced with an unpredictable delay in accepting new service requests. In order to ensure that the admission deadline is met, the CSP may over allocate resources, which increases the costs of the CSP.

Accordingly, there is a need for improvements in management of telecommunications network implemented on cloud platforms.

US 2018/139106 A1, provides a system and method for accelerated network service and/or network slice provisioning in response to customer requests or requirements.

SUMMARY

The present invention provides an automation solution for telecommunications networks deployed in a multi-cloud environment. The automation solution autonomously controls the amount of pre-allocated cloud resources (e.g., CPU, storage, VNFs, etc.) within each underlying cloud platform with the goal of ensuring that the admission delay for accepting new flows into the system is below a desired admission deadline. Objects of the invention are a method, a system and a computer program as claimed in the appended independent claims. Preferred embodiments are covered by the appended dependent claims.

BRIEF DESCRIPTION OF THE DRAWINGS

Figure 1 illustrates a telecommunication network implemented over multiple cloud platforms.
Figure 2 illustrates an over-the-top automation solution for a telecommunications network implemented over multiple cloud platforms.
Figure 3 illustrates an automation system for managing a telecommunications network implemented over multiple cloud platforms.
Figure 4 illustrates exemplary pseudocode for measuring control plane latency.
Figure 5 is an exemplary histogram for determining the arrival rate of new flows.
Figure 6 illustrates an exemplary method implemented by an automation system of managing network resources to guarantee flow admission in a network operating on a cloud system.
Figure 7 illustrates an exemplary automation system configured to manage network resources to guarantee flow admission in a network operating on a cloud system.

DETAILED DESCRIPTION

The present disclosure provides an automation solution for telecommunications networks deployed in a multi-cloud environment. From time to time, new flows will need to be implemented, for example, to meet increased demand or to provide a new service. Generally, a flow is a distributed connected service that spans over one or more cloud systems. The automation solution autonomously controls the minimum amount of pre-allocated cloud resources (e.g., CPU, storage, VNFs, etc.)

within each underlying cloud platform with the goal of ensuring that the admission delay for accepting new flows into the system is below a desired admission deadline. It fulfills this goal by controlling the amount of pre-allocated resources that are standing by to handle new flows.

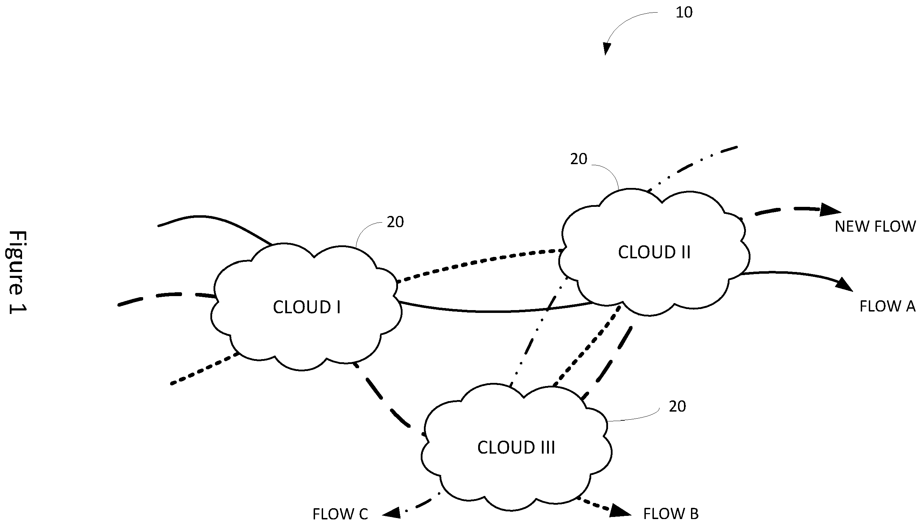

Figure 1 schematically illustrates a telecommunications network 10 implemented in a multi-cloud environment. The telecommunications network 10 may, for example, comprise a mobile communication network operating according to the Fifth Generation (5G) standard. The 5G network may, for example, comprise one or more network slices, where each network slice contains the core network functions of a 5G core (5GC) (e.g., Access and Mobility Management Function (AMF), Session Management Function (SMK, User Plane Function (UPF) etc.) tailored to a specific service provided by the network operator. In this example, the core network functions are implemented as virtual network functions (VNFs) in a cloud infrastructure comprising three cloud systems 20, which can be operated by the same cloud provider or different cloud providers.

Figure 1 shows three flows traversing the network, denoted as Flows A - C. A flow generally corresponds to a network slice that chains together a set of cloud services. In this example, Flow A uses services provided by Clouds I and II, Flow B uses services provided by Clouds I, II and III, and Flow C uses services provided by Clouds II and III.

The arrival of a new flow will potentially require the individual clouds to allocate more resources to implement a new network slice. The slowest cloud with the longest allocation time will determine how fast a new flow may be accepted. To serve the request, resources must be allocated across several clouds or several services within a single cloud. For example, the arrival of a new flow, i.e., Flow D in Figure 1, will require the allocation of new resources in all three clouds (I, II, III). The new flow can be accepted first when all requested resources are ready. However, the different cloud systems will differ in the latency to allocate new resource, which will give rise to unpredictable delay in accepting new flows. In addition, user requests must typically be granted within a specified deadline not to be deemed as failure.

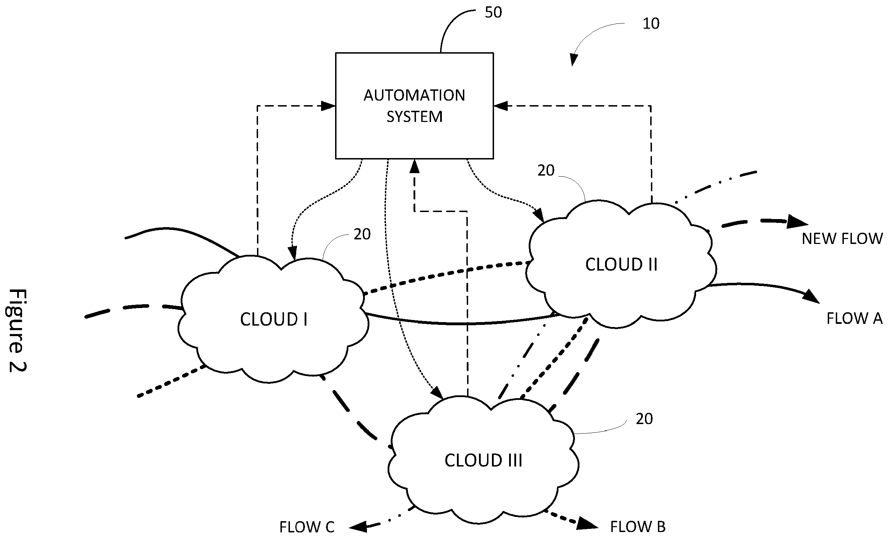

One aspect of the claimed invention is to provide an "over-the-top" automation system 50 (Figure 2) which interacts automatically with the underlying cloud systems 20 to ensure a guaranteed admission delay or other Quality of Service (QoS) criteria. The automation system 50 is based on two data-driven system identification models: i) a model for control-plane latency, ii) a model for new flow requests. The model for control-plane latency includes the time it takes to scale the capacity within the cloud platform (e.g., add storage, CPU, boot new VNFs, etc.). The model for the new flow requests reflects how many and when new flows will request to join the system. Together, these two models allow an automation system 50 to determine on the amount resources to pre-allocate in order to ensure the desired admission delay. The model for control plane latency and new flow requests can be data driven. In other embodiments, the CSP may provide one or more configuration parameters that characterize the new flow requests. In such case, the configuration parameters provided by the CSP can be used as the model of new flow requests.

Generally, the amount of pre-allocated resources and/or the configuration of the pre-allocated resources needed to ensure the admission delay will depend on the control plane latency, also referred to herein as the scaling latency, and the arrival rate of new flows. The pre-allocated resources are on standby (i.e., activated but not currently in use) and are available to cover sudden bursts of new flows. High latency and high arrival rates for new flows mean that more resources need to be pre-allocated to guarantee the admission delay for new flows. Low latency and low arrival rates mean that fewer resources need to be pre-allocated. If a cloud system 20 is slow to add resources, then more resources will need to be pre-allocated in that cloud system 20. At the other end of the spectrum, if the telecommunications network is hosted on really responsive execution platform (e.g., microservices funning on a virtual infrastructure), there will be a smaller delay and fewer resources will need to be pre-allocated. Similarly, a burst that contains a large number of new flows over a short period will require more resources on standby to ensure the admission delay. In contrast, a burst with a smaller number of flows over a longer time period will require fewer pre-allocated resources.

Figure 2 schematically illustrates an automation system 50 according to one embodiment for the same telecommunication network shown in Figure 1. As previously described, the telecommunication network comprises one or more network slices implemented by VNFs spread across multiple cloud systems 20. The automation system 50 communicates with the underlying cloud systems 20 and controls the amount of pre-allocated cloud resources (e.g., CPU, storage, VNFs, etc.) within each underlying cloud system 20 to ensure that the admission delay for accepting new flows by the telecommunications network is below a desired admission deadline.

As one example, the telecommunications network is assumed to comprise a total of M different network slice-types, each with its own unique characteristics (e.g., "low-latency, low bandwidth", "high-latency, high bandwidth", etc.). The total number of network slices hosted in the cloud systems 20 may be larger than M, since there may be multiple instances of each network slice type. There is also assumed to be a total number of N different cloud services needed to host these network slices. These services comprise VNFs, such as admission controllers, packet core nodes, IMU lookup, firewalls, etc. Additionally, Radio Access Network (RAN) functions can be virtualized and implemented using Open Radio Access Network (ORAN) and cloud RAN technologies.

To accept a new network slice or a change to an existing network slice, the CSP issues a request to the cloud system 20 to add or remove services needed by the network slice. This request states the characteristic of the network slice (i.e., the services it needs). The CSP must then wait for these services to be allocated and, once everything is allocated, the network slice will be accepted. If the pre-allocated resources available at the time of the request are not sufficient, the CSP will have to wait for the underlying cloud systems 20 to allocate resources for the network slice before it is available to support the new flow. In this context, the resources comprise specific service instances needed to host the network slice.

To ensure a high level of QoS, the automation system 50 is configured with an admission deadline D. The admission deadline D is the maximum time allowed for new network slices to be accepted following a request to join. Based on the admission deadline, the automation system 50 determines the "headroom" needed for each of the services provided by the cloud infrastructure. As used herein, the term "headroom" refers to the extra capacity on standby that is available for new requests. Stated another way, the headroom comprises the amount of standby resources need to ensure the admission deadline. The headroom, i.e. amount of standby resources, for service $i$ is computed as follows:

$$H_i(t) = \lceil (L_i(t) - D)^+ * \sum_{j=0}^{M} A_j^{\max}(t) * R_{j,i}(t) \rceil$$

where $L_i(t)$ is the scaling latency (e.g., the time it takes to add/remove resources) of service $i$, $D$ is the admission deadline for accepting new network slices, $M$ is the number of available services used to construct the flow, $A_j^{\max}(t)$ is the maximum arrival rate of requests for network slice type $j$, and $R_{i,j}(t)$ is an amount of each service $i$ for each network slice type $j$, also referred to herein as flow type. The value of $R_{i,j}(t)$ is zero if the network slice type or flow type does not use the service.

Note that the term $\sum_{j=0}^{M} A_j^{\max}(t) * R_{j,i}(t)$ is the aggregate amount of service $i$ needed to implement the different network slice types (or flow types) using a particular service given the arrival rates $A_j^{\max}(t)$ for all the network slice types.

To ensure that the scaling latency of the services is known and accurate, the automation system 50 uses a combination of data-modeling and measurement to continuously learn and update a model of the scaling latency for different services. In a similar way, the system can use data-modeling in order to continuously measure and model the amount of resource needed for different network slice types as well as the arrival rates of the different network slice types. By continuously updating these models, it is possible to ensure that the delay for accepting new network slices remains below the admission deadline.

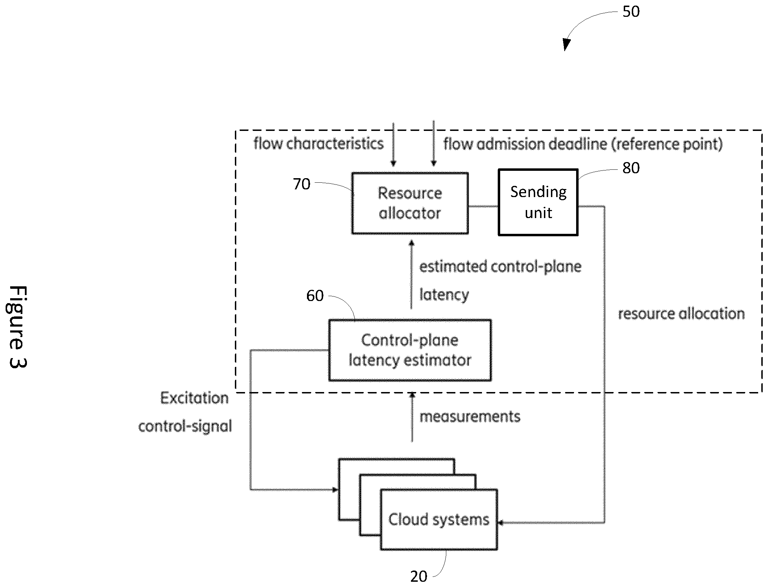

Figure 3 illustrates the main functional components of the automation system 50 according to one exemplary embodiment. The automation system 50 comprises a control plane latency estimator 60, a resource allocator 70 and a sending unit 80. The various components of the automation system 50 can be implemented by one or more microprocessors, application specific integrated circuits, hardware circuits, or a combination thereof. The control plane latency estimator 60 interacts with the cloud systems 20 to measure the control plane latency for each service provided by the cloud system 20. The control plane latency estimator 60 provides the estimated control plane latency for each service i to the resource allocator 70. In addition to the control plane latency for each service, the resource allocator 70 receives the admission deadline D, and the characteristics for each network slice type or flow type. The characteristics of a network slice or flow include the arrival rates $A_j^{\max}(t)$ of new flows and the amount $R_{i,j}(t)$ of each service required for each network slice type or flow. The arrival rate can be expressed as a number of new flows of the same type for some unit of time. These parameters can be provided by the CSP. Additionally, a statistical approach can be used to derive the arrival rate using a data driven approach. For example, instead of using a maximum arrival rate, a model of new flows can be used to compute the arrival rate corresponding to a predetermined probability, e.g. (95%). Based on the inputs, the resource allocator 70 generates models of the control plane latency and flow requests, which can be used to determine values to be entered into Equation 1.

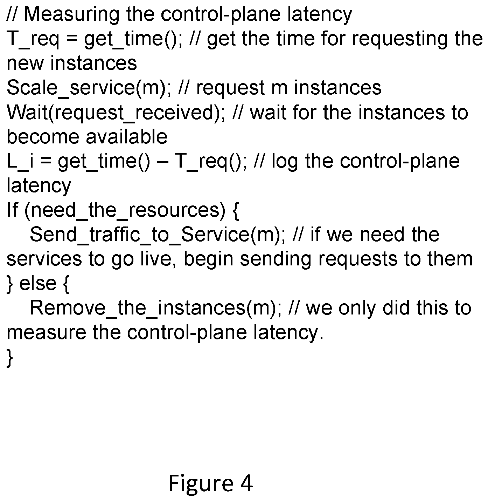

The control plane latency estimator 60 can measure the control plane latency during normal operation when new requests are sent to the cloud system 20. When a new request is sent, the control plane latency estimator 60 can log the time of the request and measure the time delay until the new services are available. The time delay equals the difference between the time at which the requesting services are available and the time of the request. Additionally, the control plane latency estimator 60 can also spoof a request if measurement data is needed and measure the time delay until the new services are available. In this case, the new services can be removed after the measurements are made. Figure 4 illustrates exemplary pseudocode for measuring the time delay.

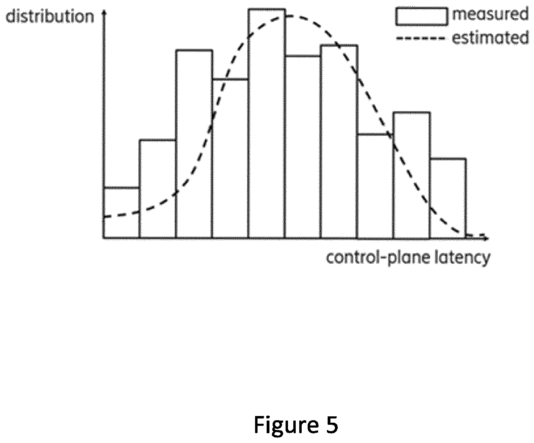

The control plane latency estimator 60 can use a variety of well-known statistical methods to model the control plane latency. As one example, Figure 5 is a representative histogram showing the distribution of control plane latency measurements. The dashed line is an estimated latency derived by applying a smoothing function to the control plane latency measurements. In this example, the control plane latency estimator can report the measurements corresponding to the 95 percentile in the control plane latency distribution (i.e., the right-most bin) to the resource allocator 70 as the control plane latency estimate. Similar techniques can be applied to modeling the arrival rate of requests for different network slice types and services.

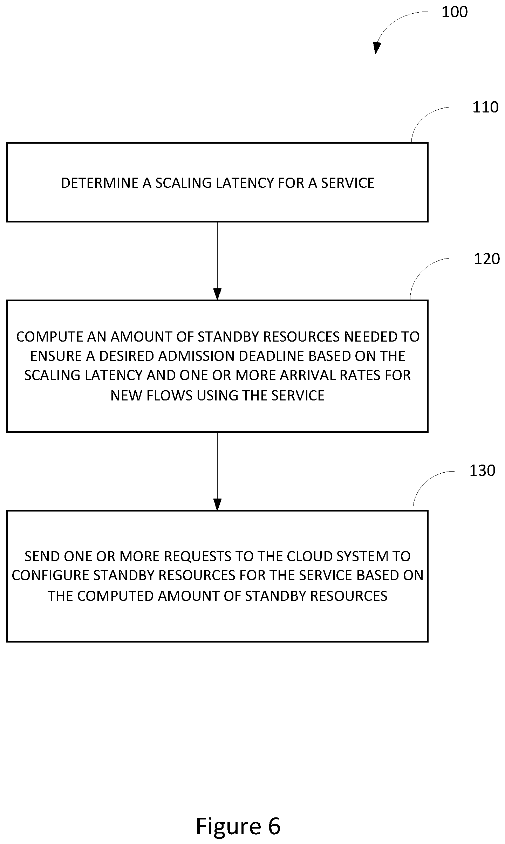

Figure 6 illustrates an exemplary method 100 implemented in an automation system 50 of managing network resources to guarantee flow admission in a network operating on a multi-vendor cloud system. For each of one or more services, the automation system 50 determines a control plane latency for the service (block 110). The automation system 50 further computes an amount of standby resources needed to ensure a desired admission deadline based on the control plane latency and arrival rates for new flows using the service (block 120). After determining the amount of standby resources needed for the service, the automation systems sends one of more requests to the cloud system to configure standby resources for the service based on the computed amount of standby resources (block 130).

In some embodiments of the method 100, determining a control plane latency for the service comprises sending a provisioning request to add the service, and measuring a time required to provision the resources for the service.

In some embodiments of the method 100, measuring a time required to provision resources for the service comprises computing a delay between a time at which the provisioning request is sent and a time when the service is available for use.

Some embodiments of the method further comprise removing the service after measuring the delay if it is determined that the service is not required.

In some embodiments of the method 100, computing an amount of standby resources needed to ensure a desired admission deadline based on the control plane latency and the one or more arrival rate comprises computing a scaling coefficient for the service based on the control plane latency and the admission deadline, computing an aggregate amount of the service needed for one or more flow types based on the one or more arrival rates, and computing the amount of standby resources needed based on the scaling coefficient and the aggregate amount of the service.

In some embodiments of the method 100, computing a scaling coefficient for the service comprises computing the scaling coefficient based on a difference between the control plane latency and the admission deadline.

In some embodiments of the method 100, sending one or more requests to configure standby resources comprises sending a request to add or remove standby resources.

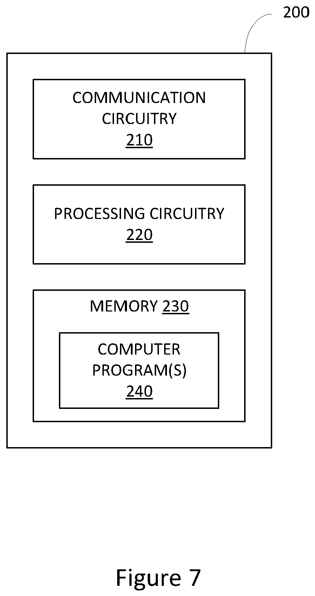

Figure 7 illustrates an embodiment of an automation system 200 according to an exemplary embodiment. The automation system 200 may serve as the automation system 50 shown in Figure 2. The automation system 200 comprises communication circuitry 210, processing circuitry 210 and memory 220.

The communication circuitry 210 comprises user interface circuitry 212 for communicating with the CSP or other user of the system and cloud interface circuitry for communicating with the cloud systems 20. The user interface circuitry 212 enables the CSP or other user to interact with the automation system 200 to configure the automation system and provide data needed for operation, such as the arrival rates and resource amounts used to calculate the headroom for services. The cloud interface circuitry 214 implements an Application Programming Interface (API) or other protocols for communicating with the cloud systems 20 to manage resources and services provided by the cloud systems 20.

The processing circuitry 220 controls the overall operation of the automation system 200 and implements the methods as herein described. The processing circuitry 220 may comprise one or more microprocessors, hardware, firmware, or a combination thereof. In one embodiment, the processing circuitry 220 is configured to perform the method shown Figure 5. In other embodiments, the processing circuitry 220 is configured to perform the method 100 shown in Figure 6.

Memory 230 comprises both volatile and non-volatile memory for storing computer program code and data needed by the processing circuit 220 for operation. Memory 230 may comprise any tangible, non-transitory computer-readable storage medium for storing data including electronic, magnetic, optical, electromagnetic, or semiconductor data storage. Memory 230 stores computer program 240 comprising executable instructions that configure the processing circuitry 220 to implement the method 100 according to Figure 6 as described herein. A computer program 240 in this regard may comprise one or more code modules corresponding to the means or units described above. In general, computer program instructions and configuration information are stored in a non-volatile memory, such as a ROM, erasable programmable read only memory (EPROM) or flash memory. Temporary data generated during operation may be stored in a volatile memory, such as a random access memory (RAM). In some embodiments, computer program 240 for configuring the processing circuitry 220 as herein described may be stored in a removable memory, such as a portable compact disc, portable digital video disc, or other removable media. The computer program 240 may also be embodied in a carrier such as an electronic signal, optical signal, radio signal, or computer readable storage medium.

Those skilled in the art will also appreciate that embodiments herein further include corresponding computer programs. A computer program comprises instructions which, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium. The invention is defined by the appended claims.

## Claims

1. A method (100) implemented in an automation system of managing network resources to guarantee flow admission in a network operating on a cloud system (20), the method comprising, for each of one or more services:

   determining (110) a control plane latency for the service;
   computing (120) an amount of standby resources needed to ensure a desired admission deadline based on the control plane latency and one or more arrival rates for new flows using the service, wherein computing (120) comprises:

   computing a scaling coefficient for the service based on the control plane latency and the desired admission deadline,
   computing an aggregate amount of the service needed for one or more the flow types based on the one or more arrival rates, and
   computing the amount of standby resources needed based on the scaling coefficient and the aggregate amount of the service; and

   sending (130) one or more requests to the cloud system to configure standby resources for the service based on the computed amount of standby resources.

2. The method (100) of claim 1, wherein determining a control plane latency for the service comprises:

   sending a provisioning request to the cloud system to add the service; and
   measuring a time required to provision resources for the service.

3. The method (100) of claim 2, wherein measuring a time required to provision resources for the service comprises computing a delay between a time at which the provisioning request is sent and a time when the service is available for use.

4. The method (100) of claim 3, further comprising removing the service after measuring the delay if it is determined that the service is not required.

5. The method (100) of claim 1, wherein computing a scaling coefficient for the service comprises computing the scaling coefficient based on a difference between the control plane latency and the admission deadline.

6. The method (100) of any one of claims 1 - 5, wherein sending one or more requests to configure standby resources comprises sending a request to add or remove standby resources.

7. An automation system (50, 200) for managing network resources to guarantee flow admission in a network operating on a cloud system, the automation system comprising:

   communication circuitry (210) for communicating with a cloud system;
   processing circuitry (220) configured to:

   determine a control plane latency for a service;
   compute an amount of standby resources needed to ensure a desired admission deadline based on the control plane latency and an arrival rate of service requests for the service, wherein compute comprises:

   compute a scaling coefficient for the service based on the control plane latency and the desired admission deadline,
   compute an aggregate amount of the service needed for one or more the flow types based on the one or more arrival rates, and
   compute the amount of standby resources needed based on the scaling coefficient and the aggregate amount of the service; and

   send one of more requests to the cloud system to configure standby resources for the service based on the computed amount of standby resources needed to ensure a desired admission deadline.

8. The automation system of claim 7, wherein the processing circuitry is further configured to perform the method of any one of claim 2 - 6.

9. A computer program (250) comprising executable instructions that, when executed by a processing circuit in automation system (50, 200), causes the automation system (50, 200) to perform any one of the methods of claims 1 - 6.

**10.** A carrier containing a computer program (230) of claim 9 wherein the carrier is one of an electronic signal, optical signal, radio signal, or computer readable storage medium.

**Patentansprüche**

**1.** Verfahren (100), das in einem Automatisierungssystem implementiert wird, zur Verwaltung von Netzwerkressourcen, um Flusszulassung in einem Netzwerk zu gewährleisten, das in einem Cloud-System (20) betrieben wird, wobei das Verfahren für jeden eines oder mehrerer Dienste Folgendes umfasst:

Bestimmen (110) einer Steuerebenenlatenz für den Dienst;
Berechnen (120) einer Menge von Standby-Ressourcen, die benötigt wird, um eine gewünschte Zulassungsfrist zu gewährleisten, basierend auf der Steuerebenenlatenz und einer oder mehreren Ankunftsraten für neue Flüsse unter Verwendung des Dienstes, wobei das Berechnen (120) Folgendes umfasst:

Berechnen eines Skalierungskoeffizienten für den Dienst basierend auf der Steuerebenenlatenz und der gewünschten Zulassungsfrist,
Berechnen einer Gesamtmenge des Dienstes, die für einen oder mehrere der Flusstypen benötigt wird, basierend auf der einen oder den mehreren Ankunftsraten, und
Berechnen der benötigten Menge von Standby-Ressourcen basierend auf dem Skalierungskoeffizienten und der Gesamtmenge des Dienstes; und

Senden (130) einer oder mehrerer Anforderungen an das Cloud-System, um Standby-Ressourcen für den Dienst basierend auf der berechneten Menge von Standby-Ressourcen zu konfigurieren.

**2.** Verfahren (100) nach Anspruch 1, wobei das Bestimmen einer Steuerebenenlatenz für den Dienst Folgendes umfasst:

Senden einer Bereitstellungsanforderung an das Cloud-System, um den Dienst hinzuzufügen; und
Messen einer Zeit, die zum Bereitstellen von Ressourcen für den Dienst erforderlich ist.

**3.** Verfahren (100) nach Anspruch 2, wobei das Messen einer zum Bereitstellen von Ressourcen für den Dienst erforderlichen Zeit Berechnen einer Verzögerung zwischen einer Zeit, zu der die Bereitstellungsanforderung gesendet wird, und einer Zeit umfasst, zu der der Dienst zur Verwendung verfügbar ist.

**4.** Verfahren (100) nach Anspruch 3, ferner umfassend Entfernen des Dienstes nach dem Messen der Verzögerung, falls bestimmt wird, dass der Dienst nicht erforderlich ist.

**5.** Verfahren (100) nach Anspruch 1, wobei das Berechnen eines Skalierungskoeffizienten für den Dienst Berechnen des Skalierungskoeffizienten basierend auf einer Differenz zwischen der Steuerebenenlatenz und der Zulassungsfrist umfasst.

**6.** Verfahren (100) nach einem der Ansprüche 1-5, wobei das Senden der einen oder der mehreren Anforderungen zum Konfigurieren von Standby-Ressourcen Senden einer Anforderung zum Hinzufügen oder Entfernen von Standby-Ressourcen umfasst.

**7.** Automatisierungssystem (50, 200) zum Verwalten von Netzwerkressourcen, um Flusszulassung in einem Netzwerk zu gewährleisten, das in einem Cloud-System betrieben wird, wobei das Automatisierungssystem Folgendes umfasst:

Kommunikationsschaltungsanordnung (210) zum Kommunizieren mit einem Cloud-System;
Verarbeitungsschaltungsanordnung (220), die zu Folgendem konfiguriert ist:

Bestimmen einer Steuerebenenlatenz für den Dienst;
Berechnen einer Menge von Standby-Ressourcen, die benötigt wird, um eine gewünschte Zulassungsfrist zu gewährleisten, basierend auf der Steuerebenenlatenz und einer Ankunftsrate von Dienstanforderungen für den Dienst, wobei das Berechnen Folgendes umfasst:

Berechnen eines Skalierungskoeffizienten für den Dienst basierend auf der Steuerebenenlatenz und der gewünschten Zulassungsfrist,
Berechnen einer Gesamtmenge des Dienstes, die für einen oder mehrere der Flusstypen benötigt wird, basierend auf der einen oder den mehreren Ankunftsraten, und
Berechnen der benötigten Menge von Standby-Ressourcen basierend auf dem Skalierungskoeffizienten und der Gesamtmenge des Dienstes; und

Senden einer oder mehrerer Anforderungen an das Cloud-System, um Standby-Ressourcen für den Dienst basierend auf der berechneten Menge von Standby-Ressourcen zu konfigurieren, die benötigt wird, um eine gewünschte Zulassungsfrist zu gewährleisten.

**8.** Automatisierungssystem nach Anspruch 7, wobei die Verarbeitungsschaltungsanordnung ferner zum Durchführen des Verfahrens nach einem Ansprüche 2-6 konfiguriert ist.

**9.** Computerprogramm (250), umfassend ausführbare Anweisungen, die bei Ausführung durch eine Verarbeitungsschaltung in einem Automatisierungssystem (50, 200) das Automatisierungssystem (50, 200) zum Durchführen eines der Verfahren nach Anspruch 1-6 veranlassen.

**10.** Datenträger, der ein Computerprogramm (230) nach Anspruch 9 enthält, wobei der Datenträger eines von einem elektronischen Signal, einem optischen Signal, einem Funksignal oder einem computerlesbaren Speichermedium ist.

**Revendications**

**1.** Procédé (100) mis en œuvre dans un système d'automatisation destiné à gérer des ressources de réseau pour garantir une admission de flux dans un réseau fonctionnant sur un système cloud (20), le procédé comprenant, pour chacun parmi un ou plusieurs services :

la détermination (110) d'une latence de plan de commande pour le service ; le calcul (120) d'une quantité de ressources en attente nécessaires pour respecter un délai **d'admission** souhaité sur la base de la latence de plan de commande et d'un ou plusieurs débits d'arrivée pour de nouveaux flux utilisant le service, dans lequel le calcul (120) comprend :

le calcul d'un coefficient de mise à l'échelle pour le service sur la base de la latence de plan de commande et du délai d'admission souhaité, le calcul d'une quantité cumulée du service nécessaire pour un ou plusieurs types de flux sur la base des ou plusieurs débits d'arrivée, et le calcul de la quantité de ressources en attente nécessaires sur la base du coefficient de mise à l'échelle et de la quantité cumulée du service ; et

l'envoi (130) d'une ou plusieurs demandes au système cloud pour configurer des ressources en attente pour le service sur la base de la quantité calculée de ressources en attente.

**2.** Procédé (100) selon la revendication 1, dans lequel la détermination d'une latence de plan de commande pour le service comprend :

l'envoi d'une demande de fourniture au système cloud pour ajouter le service ; et la mesure d'un temps nécessaire pour fournir des ressources pour le service.

**3.** Procédé (100) selon la revendication 2, dans lequel la mesure d'un temps nécessaire pour fournir des ressources pour le service comprend le calcul d'un retard entre un temps auquel la demande de fourniture est envoyée et un temps auquel le service est disponible pour être utilisé.

**4.** Procédé (100) selon la revendication 3, comprenant en outre la suppression du service après la mesure du retard s'il est déterminé que le service n'est pas nécessaire.

**5.** Procédé (100) selon la revendication 1, dans lequel le calcul d'un coefficient de mise à l'échelle pour le service comprend le calcul du coefficient de mise à l'échelle sur la base d'une différence entre la latence de plan de commande et le délai d'admission.

**6.** Procédé (100) selon l'une quelconque des revendications 1 à 5, dans lequel l'envoi d'une ou plusieurs demandes pour configurer des ressources en attente comprend l'envoi d'une demande pour ajouter ou supprimer des ressources en attente.

**7.** Système d'automatisation (50, 200) destiné à gérer des ressources de réseau pour garantir une admission de flux dans un réseau fonctionnant sur un système cloud, le système d'automatisation comprenant :

une circuiterie de communication (210) pour communiquer avec un système cloud ; une circuiterie de traitement (220) configurée pour :

déterminer une latence de plan de commande pour un service ; calculer une quantité de ressources en attente nécessaires pour respecter un délai **d'admission** souhaité sur la base de la latence de plan de commande et d'un débit d'arrivée de demandes de service pour le service, dans lequel le calcul comprend :

calculer un coefficient de mise à l'échelle pour le service sur la base de la latence de plan de commande et du délai d'admission souhaité,

calculer une quantité cumulée du service nécessaire pour un ou plusieurs types de flux sur la base des ou plusieurs débits d'arrivée, et

calculer la quantité de ressources en attente nécessaires sur la base du coefficient de mise à l'échelle et de la quantité cumulée du service ; et

envoyer une ou plusieurs demandes au système cloud pour configurer des ressources en attente pour le service sur la base de la quantité calculée de ressources en attente nécessaires pour respecter un délai d'admission souhaité.

8. Système d'automatisation selon la revendication 7, dans lequel la circuiterie de traitement est en outre configurée pour réaliser le procédé selon l'une quelconque des revendications 2 à 6.

9. Programme informatique (250) comprenant des instructions exécutables qui, lorsqu'elles sont exécutées par un circuit de traitement dans un système d'automatisation (50, 200), amènent le système d'automatisation (50, 200) à réaliser l'un quelconque des procédés selon les revendications 1 à 6.

10. Support contenant un programme informatique (230) selon la revendication 9, dans lequel le support est l'un parmi un signal électronique, un signal optique, un signal radio et un support de stockage lisible par ordinateur.

Figure 1

Figure 2

Figure 3

```
// Measuring the control-plane latency
T_req = get_time(); // get the time for requesting the
new instances
Scale_service(m); // request m instances
Wait(request_received); // wait for the instances to
become available
L_i = get_time() – T_req(); // log the control-plane
latency
If (need_the_resources) {
    Send_traffic_to_Service(m); // if we need the
services to go live, begin sending requests to them
} else {
    Remove_the_instances(m); // we only did this to
measure the control-plane latency.
}
```

Figure 4

Figure 5

100

110

DETERMINE A SCALING LATENCY FOR A SERVICE

120

COMPUTE AN AMOUNT OF STANDBY RESOURCES NEEDED TO ENSURE A DESIRED ADMISSION DEADLINE BASED ON THE SCALING LATENCY AND ONE OR MORE ARRIVAL RATES FOR NEW FLOWS USING THE SERVICE

130

SEND ONE OR MORE REQUESTS TO THE CLOUD SYSTEM TO CONFIGURE STANDBY RESOURCES FOR THE SERVICE BASED ON THE COMPUTED AMOUNT OF STANDBY RESOURCES

Figure 6

COMMUNICATION
CIRCUITRY
210

PROCESSING CIRCUITRY
220

MEMORY 230

COMPUTER
PROGRAM(S)
240

200

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018139106 A1